# NEW EUROPEAN PATENT SPECIFICATION

(11) **EP 2 843 129 B2**
(45) Date of publication and mention of the opposition decision: **07.06.2023**
(45) Mention of the grant of the patent: 13.05.2020
(21) Application number: 13290205.7
(22) Date of filing: 30.08.2013
(51) Int. Cl.: D21H 13/40, E04C 2/04

(54) **REINFORCED GYPSUM BOARD HAVING IMPROVED FIRE RESISTANCE**
Verstärkte Gipsplatte mit verbesserter Feuerbeständigkeit
Plaque de plâtre renforcée disposant d'une résistance au feu améliorée

(43) Date of publication of application: 04.03.2015
(73) Proprietor: SAINT-GOBAIN PLACO, 92400 Courbevoie (FR)
(72) Inventor: Lelogeay, Sophie, 73310 Ontex (FR)
(74) Representative: Murgitroyd & Company

(56) References cited:
- EP-A1- 2 230 075
- WO-A1-2008/150647
- WO-A1-2010/019338
- WO-A1-2010/106444
- WO-A1-2014/141190
- WO-A2-2004/094743
- WO-A2-2008/008868
- JP-A- 2001 020 165
- US-A1- 2006 068 186
- US-A1- 2007 298 235
- US-A1- 2008 176 050
- US-A1- 2009 029 141
- US-A1- 2009 208 714
- PARK JC et al.: "Electrospun poly(vinyl alcohol) nanofibers: effects of degree of hydrolysis and enhanced water stability", Polymer Journal, vol. 42, 2010, pages 273-276,
- U.S. Geological Survey - Mica Statistics and Information(https://www.usgs.gov/centers/n mic/mica-statistics-and-information)
- Translation of JP2001020165A (D5)
- Dow: "AQUASET? TF-150 - Acrylic Binder for Nonwovens", Technical Data Sheet, January 2011 (2011-01), pages 1-2,
- "Polycarboxylate", , Retrieved from the Internet: URL:https://www.biesterfeld.com/en/it/prod uct/polycarboxylate
- Acronal - Acrylic binders for architectural coatings(https://www.basf.com/us/en/produc ts/General-Business-Topics/dispersions/Pro ducts/acronaH.html)
- Acronal - Acrylic binders for construction products(https://www.basf.com/us/en/produc ts/General-Business-Topics/dispersions/Pro ducts/acronall.html)
- Acronal - Acrylic binders for industrial coatings(https://www.basf.com/us/en/produc ts/General-Business-Topics/disoersions/Pro ducts/acronaH.html)
- LEE et al.: "Nanotribological Effect of Water Layers Intercalated between Exfoliated MoS2 and Mica", J. Phys. Chem. C, vol. 124, 2020, pages 16902-16907,

## Description

### Field of the invention

The present invention relates to gypsum boards comprising fibrous mat facers, as well as fibrous mats for use as such facers.

### Background to the invention

It is known to create gypsum boards for use e.g. in construction, by depositing a layer of gypsum slurry between two opposing paper liners. However, in an effort to maintain board performance even in humid environments, it has been proposed to replace the paper facing sheets with opposing layers formed, in part, from glass fibre mats. The fibres of such mats are typically bound using a urea formaldehyde resin binder.

Due to concerns about the odour of volatile organic compounds emitted from urea formaldehyde resins, as well as the need to comply with regulations limiting the levels of these compounds, it is desirable to provide substantially formaldehyde-free binders for mats.

The formaldehyde-free binders in use generally comprise flame-retardants, in order to increase fire resistance.

WO 2010/019338 discloses a reinforcing mat that includes glass fibres bonded by a binder composition, wherein the binder composition includes a formaldehyde-free binder cured with a hydrophobic additive.

WO 2008/008868 discloses a fibre mat of improved hot wet tensile strength, the mat consisting of fibres, a formaldehyde-free resinous fibre binder coating the fibres, and a binder-modifier which is a functional silane monomer or polymer.

### Summary of the invention

At its most general, the present invention provides a mat for use as a gypsum reinforcement, the mat consisting of fibres with a length greater than 20 mm, the fibres bound by a polymeric binder, wherein the polymeric binder is substantially formaldehyde-free, and the diameter of the fibres is greater than 14 µm, wherein the polymeric binder is hydrophilic, wherein acceptable fire resistance is achieved without the need for the incorporation of flame retardants into the binder, and acceptable flexural strength is also achieved.

As used herein, the term "formaldehyde-free" means a binder that releases or emits formaldehyde at a level of below 10 µg / m³, preferably below 5 µg / m³ after 28 days, according to the ISO 16000 standard test.

In a first aspect, the present invention provides a gypsum board according to claim 1.

Effectively, the fibrous mat provides a facer for the board.

The polymeric binder is hydrophilic. The binder may be intrinsically hydrophilic, or may be provided with hydrophilic properties through the presence of a hydrophilic additive.

In certain embodiments, the mat may be wholly embedded in the face of the board. That is, gypsum layers are present on both the inner and outer surfaces of the mat. Typically, these embodiments are formed when gypsum slurry that has been deposited on an inner surface of the mat is caused to penetrate through the mat, thus providing an outer layer of gypsum that masks the outer surface of the mat. As is well-known in the art, the penetration of gypsum slurry through the mat may be aided by the action of rollers (as described in e.g. US 6,524,679) or the application of vibration (as described in e.g. US 4,378,405).

In other embodiments, the mat may be only partially embedded in the face of the board, that is, there is no complete outer layer of gypsum that masks the mat.

Preferably, the length of the fibres in the mat is greater than 22 mm, more preferably greater than 23 mm. It is thought that by increasing the fibre length, the mat is able to continue to provide reinforcement to the gypsum board in the event of a fire even after the binder has largely been burned off. Thus, board integrity is maintained and the progress of the fire is inhibited, even in the absence of flame retardants.

In general, the fibre length is less than 30 mm, preferably less than 28 mm, more preferably less than 27 mm.

The hydrophilic nature of the polymeric binder ensures good penetration of the fibrous mat by gypsum slurry during the production process, such that acceptable levels of flexural strength are achieved.

Preferably, the diameter of the fibres is greater than 15 µm. In general, the diameter of the fibres is less than 30 µm, preferably less than 20 µm.

The polymeric binder for the mat may comprise an acrylate polymer, such as polycarboxylate; poly(meth)acrylate; an acrylate-methacrylate copolymer; a styrene acrylic copolymer; a styrene methacrylic copolymer; a styrene butadiene copolymer; or a mixture thereof. Optionally the polymeric binder comprises a hydrophilic additive. Suitable hydrophilic additives include polysorbate surfactants (such as polyoxyethylene sorbitan monolaurate) and non-ionic surfactant copolymers of polyoxyethylene and polyoxypropylene. Suitable acrylate polymers are Acronal DS 2416 (from BASF); Acrodur DS 3530 (from BASF); Aquaset TF 150 (from Dow); HF05 (from Dow); and Acronal DS 5350 (from BASF).

Acronal DS 2416 may be preferred as the polymeric binder, as it does not require the addition of a separate hydrophilic species.

Typically, the polymeric binder is a thermoplastic polymer or an elastomer.

In general, the fibrous mat comprises glass fibres, such as E-glass. Alternatively, the fibrous mat may comprise other inorganic fibres, such as rock wool (e.g. produced from basalt).

The mat typically comprises mineral fibres in an amount of 10-1100 g/m², preferably 20-300 g/m². The binder is generally present in an amount of 5-350% relative to the weight of the mat of mineral fibres, preferably from 10 to 100%, and advantageously from 15 to 30%.

In a second aspect, the present invention provides a fibrous mat according to claim 4.

The fibrous mat according to the second aspect of the invention may comprise one or more optional features of the mat that is embedded in one of the faces of the gypsum board according to the first aspect of the invention.

Several methods are known in the art for applying the binder to the mat. For example, the binder may be applied to the mat through a spray-coating process, or through the use of rollers. In other processes, the binder may be applied to the mat by means of an applicator that delivers a controlled supply of binder material onto the mat, as the mat is conveyed past the applicator opening. In an alternative process, the binder material may be deposited onto the mat and a distributed across the mat by means of a scraper element.

### Detailed description

The invention will now be described by way of example only.

### Example 1

Two litres of an aqueous solution comprising 250 g of hydroxyethycellulose (thickener: sold under the reference Natrosol^{™} by Hercules) and 0.3 g of an ethoxylated octadecyclamine/octadecylguanidine complex (surface agent: sold under the reference Aerosol C-61 by Cytec; solids content: 70%) were prepared.

2.54 g of cut yarns (length: 24 mm; diameter: 16 µm) of E-glass were added to the solution.

The suspension of glass yarns obtained is transferred to a device which makes it possible to produce a mat. The device comprises a container having a perforated base that allows for fluid communication between the internal volume of the container and a suction apparatus located beneath the container.

The suspension is deposited in the container and homogenised by vigorous stirring, and then the suction apparatus is activated so as to remove the fluid. A mat of glass fibres with dimensions of 30cm x 30cm and having a weight per surface area of 28.2 g/m² is recovered on the screen.

The mat is immersed for 1 minute in an aqueous solution of acrylic resin (Acronal DS 2416, sold by BASF). The excess binder in the mat is removed by suction and then the mat is heated at 210°C for 1 minute in order to consolidate it. After this treatment, the mat contains 5 g/m² of acrylic resin.

### Example 2 and Comparative Examples 3-6

Example 2 and Comparative Examples 3-6 relate to gypsum boards having embedded glass fibre mats on both faces. The characteristics of the glass fibre mats are summarised in Table 1.

### Fire resistance: test 1

Gypsum boards according to Example 2 and Comparative Examples 3-6 were subjected to a fire resistance test in accordance with BS:EN 1364 1:1999. Briefly stated, a partition was constructed in which a frame was clad on each face with a single layer of 12.5 mm thick boards. One side of the partition was exposed to a furnace fire.

The performance of the boards was characterised as satisfactory if the average temperature on the unexposed face of the partition remained below 140°C for at least 60 minutes. The results are summarised in Table 1.

### Fire resistance: test 2

Additional fire testing of gypsum boards according to Example 2 and Comparative Examples 3-6 was carried out using the methodology of BS EN 1363-1:1999. Briefly stated, a steel beam was clad with a single layer of 20 mm think boards and exposed to a furnace fire.

The performance of the boards was characterised as satisfactory if the mean temperature of the steel beam remained below 550°C for at least 82 minutes, and the boards retained their mechanical integrity for over 90 minutes.

### Testing flexural strength

Gypsum boards according to Example 2 and Comparative Examples 3-6 were subjected to a test of flexural strength according to the method set out in BS:EN 520. The performance of the boards was characterised as satisfactory if the flexural strength exceeded a predetermined level. The results are given in Table 1.

### Characterisation of slurry penetration

The extent of slurry penetration through the fibrous mat was characterised through visual inspection and was classified as "satisfactory" if the penetration was complete and the resulting board surface was flat. The results are given in Table 1.

**Table 1**

| **Example** | **Binder** | **Fibre diameter (µm)** | **Fibre length (mm)** | **Grammage** (mass per unit area of fibres + binder in g/m²) | **Slurry penetration** | **Flexural strength** | **Fire resistance: test 1** | **Fire resistance: test 2** |
|---|---|---|---|---|---|---|---|---|
| Comparative Example 3 | Urea Formaldehyde | 16 | 24 | 70 | Satisfactory | Satisfactory | Satisfactory | Satisfactory |
| Comparative Example 4 | Polycarboxylate | 13 | 18 | 75 | Unsatisfactory | Unsatisfactory | Not tested | Not tested |
| Comparative Example 5 | Polycarboxylate | 13 | 18 | 70 | Unsatisfactory | Satisfactory | Satisfactory | Unsatisfactory |
| Comparative Example 6 | Polycarboxylate | 16 | 24 | 70 | Unsatisfactory | Not tested | Not tested | Not tested |
| Example 2 | Acrylic (wettable) | 16 | 24 | 70 | Satisfactory | Satisfactory | Satisfactory | Satisfactory |

## Claims

1. A gypsum board having two opposed faces, wherein a fibrous mat is embedded in one of the faces of the board, the fibrous mat consisting of fibres with a length greater than 20 mm, the fibres bound by a polymeric binder, wherein the polymeric binder is substantially formaldehyde-free, and the diameter of the fibres is greater than 14 µm, wherein the polymeric binder is hydrophilic.

2. A gypsum board according to claim 1, wherein the fibrous mat is wholly embedded in the face of the board.

3. A gypsum board according to claim 1, wherein the fibrous mat is partially embedded in the face of the board.

4. A fibrous mat consisting of fibres with a length greater than 20 mm, the fibres bound by a polymeric binder, wherein the polymeric binder is substantially formaldehyde-free, and the diameter of the fibres is greater than 14 µm, the mat being for embedding in gypsum to provide a gypsum board according to any one of claims 1 to 3, wherein the polymeric binder is hydrophilic.

5. A fibrous mat according to claim 4, wherein the polymeric binder is selected from the group consisting of: acrylate polymers; methacrylate polymers; acrylate-methacrylate copolymers; styrene acrylic copolymers; styrene-methacrylate copolymers; styrene butadiene copolymers; and mixtures thereof.

6. A fibrous mat according to claim 5, wherein the polymeric binder further comprises a hydrophilic additive.

7. A fibrous mat according to claim 6, wherein the hydrophilic additive is selected from the group consisting of: polysorbate surfactants (such as polyoxyethylene sorbitan monolaurate) and non-ionic surfactants copolymers of polyoxyethylene and polyoxypropylene.

8. A fibrous mat according to any one of claims 4 to 7, wherein the fibrous mat comprises glass fibres.

9. A fibrous mat according to any one of claims 4-8, wherein the diameter of the fibres is greater than 15 µm, preferably greater than 16 µm.

10. A fibrous mat according to any one of claims 4-9, wherein the length of the fibres is greater than 22 mm, preferably greater than 23 mm.

11. A fibrous mat according to any one of claims 4-10, wherein the mat is a non-woven mat.

## Patentansprüche

1. Eine Gipsplatte mit zwei gegenüberliegenden Flächen, wobei eine Fasermatte in einer der Flächen der Platte eingebettet ist, wobei die Fasermatte aus Fasern mit einer Länge von mehr als 20 mm besteht, wobei die Fasern durch ein polymeres Bindungsmittel gebunden sind, wobei das polymere Bindungsmittel im Wesentlichen formaldehydfrei ist und der Durchmesser der Fasern mehr als 14 µm beträgt, wobei das polymere Bindungsmittel hydrophil ist.

2. Gipsplatte gemäß Anspruch 1, wobei die Fasermatte in der Fläche der Platte vollständig eingebettet ist.

3. Gipsplatte gemäß Anspruch 1, wobei die Fasermatte in der Fläche der Platte teilweise eingebettet ist.

4. Eine Fasermatte, die aus Fasern mit einer Länge von mehr als 20 mm besteht, wobei die Fasern durch ein polymeres Bindungsmittel gebunden sind, wobei das polymere Bindungsmittel im Wesentlichen formaldehydfrei ist und der Durchmesser der Fasern mehr als 14 µm beträgt, wobei die Matte zum Einbetten in Gips ist, um eine Gipsplatte gemäß einem der Ansprüche 1 bis 3 bereitzustellen, wobei das polymere Bindungsmittel hydrophil ist.

5. Fasermatte gemäß Anspruch 4, wobei das polymere Bindungsmittel aus der Gruppe ausgewählt ist, die aus Folgendem besteht: Acrylatpolymeren; Methacrylatpolymeren; Acrylat-Methacrylat-Copolymeren; Styrol-Acryl-Copolymeren; Styrol-Methacrylat-Copolymeren; Styrol-Butadien-Copolymeren; und Mischungen davon.

6. Fasermatte gemäß Anspruch 5, wobei das polymere Bindungsmittel ferner einen hydrophilen Zusatzstoff beinhaltet.

7. Fasermatte gemäß Anspruch 6, wobei der hydrophile Zusatzstoff aus der Gruppe ausgewählt ist, die aus Folgendem besteht: Polysorbat-Tensiden (wie etwa Polyoxyethylen-sorbitan-monolaurat) und nichtionischen Tensid-Copolymeren von Polyoxyethylen und Polyoxypropylen.

8. Fasermatte gemäß einem der Ansprüche 4 bis 7, wobei die Fasermatte Glasfasern beinhaltet.

9. Fasermatte gemäß einem der Ansprüche 4-8, wobei der Durchmesser der Fasern mehr als 15 µm, vorzugsweise mehr als 16 µm beträgt.

10. Fasermatte gemäß einem der Ansprüche 4-9, wobei die Länge der Fasern mehr als 22 mm, vorzugsweise mehr als 23 mm beträgt.

11. Fasermatte gemäß einem der Ansprüche 4-10, wobei die Matte eine Vliesmatte ist.

## Revendications

1. Une plaque de plâtre ayant deux faces opposées, dans laquelle un mat fibreux est intégré dans une des faces de la plaque, le mat fibreux consistant en des fibres d'une longueur supérieure à 20 mm, les fibres étant liées par un liant polymère, dans laquelle le liant polymère est substantiellement exempt de formaldéhyde, et le diamètre des fibres est supérieur à 14 µm, dans laquelle le liant polymère est hydrophile.

2. Une plaque de plâtre selon la revendication 1, dans laquelle le mat fibreux est complètement intégré dans la face de la plaque.

3. Une plaque de plâtre selon la revendication 1, dans laquelle le mat fibreux est partiellement intégré dans la face de la plaque.

4. Un mat fibreux consistant en des fibres d'une longueur supérieure à 20 mm, les fibres étant liées par un liant polymère, dans lequel le liant polymère est substantiellement exempt de formaldéhyde, et le diamètre des fibres est supérieur à 14 µm, le mat étant destiné à être intégré dans du plâtre afin de fournir une plaque de plâtre selon n'importe laquelle des revendications 1 à 3, dans lequel le liant polymère est hydrophile.

5. Un mat fibreux selon la revendication 4, dans lequel le liant polymère est sélectionné dans le groupe constitué de : polymères d'acrylate ; polymères de méthacrylate ; copolymères d'acrylate-méthacrylate ; copolymères de styrène-acrylique ; copolymères de styrène-méthacrylate ; copolymères de styrène-butadiène ; et mélanges de ceux-ci.

6. Un mat fibreux selon la revendication 5, dans lequel le liant polymère comprend en sus un additif hydrophile.

7. Un mat fibreux selon la revendication 6, dans lequel l'additif hydrophile est sélectionné dans le groupe constitué de : tensioactifs polysorbate (tels que le monolaurate de polyoxyéthylène sorbitan) et copolymères tensioactifs non ioniques de polyoxyéthylène et polyoxypropylène.

8. Un mat fibreux selon n'importe laquelle des revendications 4 à 7, le mat fibreux comprenant des fibres de verre.

9. Un mat fibreux selon n'importe laquelle des revendications 4 à 8, dans lequel le diamètre des fibres est supérieur à 15 µm, de préférence supérieur à 16 µm.

10. Un mat fibreux selon n'importe laquelle des revendications 4 à 9, dans lequel la longueur des fibres est supérieure à 22 mm, de préférence supérieure à 23 mm.

11. Un mat fibreux selon n'importe laquelle des revendications 4 à 10, le mat étant un mat non tissé.
